# EUROPEAN PATENT SPECIFICATION

(11) **EP 1 755 911 B1**
(45) Date of publication and mention of the grant of the patent: **20.01.2010**
(21) Application number: 05744233.7
(22) Date of filing: 27.04.2005
(51) Int. Cl.: B60J 10/00, B60J 10/04

(54) **WEATHERSEAL WITH IMPROVED SHOW SURFACE**
WITTERUNGSDICHTUNG MIT VERBESSERTER DARBIETUNGSFLÄCHE
CAOUTCHOUC D'ETANCHEITE UNE SURFACE DE PRESENTATION AMELIOREE

(30) Priority: 27.04.2004 US 832913
(43) Date of publication of application: 28.02.2007
(73) Proprietor: Cooper-Standard Automotive, Inc., Novi, MI 48375-5329 (US)
(72) Inventor: SHUMULINSKIY, Gennadiy, Oak Park, MI 48237 (US)
(74) Representative: Johnstone, Douglas Ian
(86) International application number: PCT/US2005/014484
(87) International publication number: WO 2005/104761

(56) References cited:
- US-A- 5 743 047
- US-A- 6 141 854
- US-B1- 6 321 490
- US-B1- 6 321 490
- US-B1- 6 612 074

## Description

### Background of the Invention

This application relates to a weatherseal, and particularly to an outer belt seal provided along a lower edge of a window opening in a vehicle door. However, it will be appreciated that the invention is not limited to this particular application and may have use in similar environments requiring a high quality show surface of the weatherseal.

Belt line weatherstrips or weatherseals are generally well-known in the art. For example, commonly-owned U.S. Patent Nos. 5,493,815, 5,618,593; 5,207,027; and 4,949,507, the details of which are incorporated herein by reference, disclose outer belt weatherseals. Some of these patents are directed toward improving the show surface, i.e, that outer or external portion of the weatherseal that faces outwardly from the vehicle, and in this instance along the lower periphery of the window opening in the door since these patents are directed to outer belts.

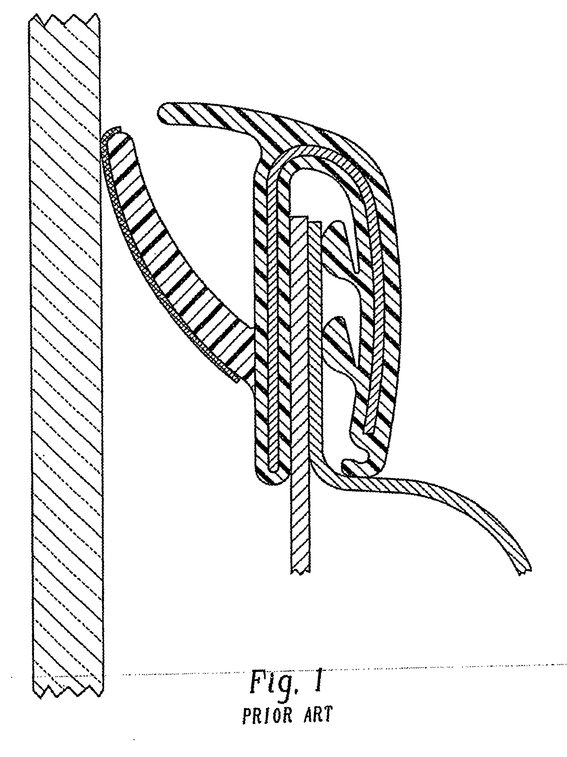

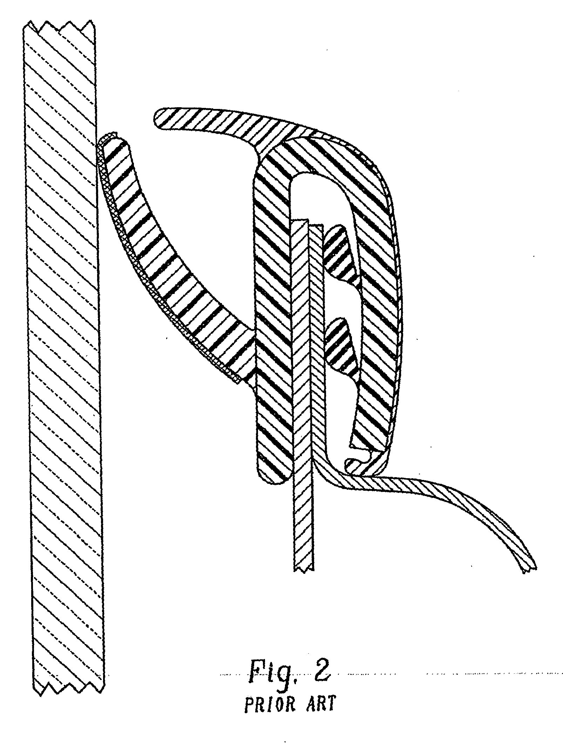

The prior art has developed over the years and can be generally summarized for background purposes by two belt weatherstrip assemblies generally illustrated in Figures 1 and 2 that are representative of these types of weatherseals. For example, Figure 1 illustrates a supported elastomeric material (such as EPDM) having an inverted, generally U-shaped body with first and second legs supported by a rigid carrier, such as a metal carrier. The EPDM encapsulates the carrier and is conformed to grippingly engage a flange of the vehicle. For example, gripper fins extend inwardly from one or both of the legs to engage the metal flange of the vehicle and secure the weatherseal to the vehicle along the belt line and adjacent the window opening. A seal lip extends angularly outward from one of the legs of the body and typically includes a low-friction surface material that sealingly engages an outer surface of the window. The weatherseal may also include an additional lip to hide or partially cover a gap between the belt seal body and the seal lip, as well as a cushion lip at an outer terminal end of the second or outer leg that abuttingly engages the vehicle surface below the flange.

One of the legs of the body faces outwardly from the vehicle and provides the show surface. It is desirable that the show surface have a consistent, aesthetically pleasing surface finish since the show surface impacts on the overall aesthetics of the vehicle.

EPDM rubber was almost universally used as a sealing material because of its very good sealing characteristics, a long life, and other properties that make it particularly well suited to this application. Rubber seals provide a good seal, withstand a wide range of temperatures, and are easily extruded in configurations that allow them to be used in a wide variety of particular applications.

A persistent disadvantage of rubber seals is that they are normally coal black in color, and cannot be readily made in colors other than black. EPDM rubber is difficult or impossible to color, and therefore is almost universally black, and has a relatively low gloss. Although vehicle purchasers are used to low gloss seals for movable and fixed vehicle windows, there is a demand among vehicle designers for systems that allow different color choices, so that, for example, the seals can be matched or coordinated with body colors, chrome or other treatments can be used, and basically, that a wider variety of colors than dull black can be employed. Many attempts have been made to make the rubber seals more attractive by providing surface coatings of a plastic material or the like thereon, which can be both colored or textured to match the appearance of the vehicle on which the seals are used.

Another problem associated with extruded rubber seals relates to the need of using metal carriers in the gripper portion of the seal so that seal may be firmly attached to the flange of the door or car body. There are many disadvantages of using metal carrier in seals: additional manufacturing step of forming metal carrier, perplexity of cutting operation; necessity of end treatment due to rust of metal; weight of the seal etc., and all of these add cost to the sealing system.

In recent years, thermoplastic elastomers have become preferred materials rather than thermosetting materials, such as EPDM rubber, in many sealing applications. Good sealing characteristics of thermoplastic elastomers together with good colorability, feasibility of co-extruding with rigid polymers such as polyvinylchloride (PVC), polypropylene (PP), Nylon, etc., as well as with decorative films and ease of processing, give thermoplastic elastomers advantages over thermosetting materials, such as EPDM rubber, in many sealing applications.

Combination of rigid and flexible polymers allows manufacturers to create metal free weatherseals that considerably decrease the cost and improve design flexibility.

It is also known, as illustrated in Figure 2, to provide a thermoplastic outer belt weatherseal. For example, the body is a molded or extruded thermoplastic assembly that typically does not include a rigid carrier, and a thin exterior show surface is provided in addition to the seal lip and hider lip constructions described and shown in Figure 1. The arrangement of Figure 2 illustrates that different portions of the assembly may be formed of different materials, for example, the body may be a more rigid thermoplastic while the seal lip is a more flexible material that conforms to the window surface.

Because of the different cooling and shrinkage rates of the different material components of the thermoplastic weatherseal, for example, the use of a rigid thermoplastic material as carrier and flexible materials as lips and grippers, the show surface often has an irregular surface finish. Proposed solutions include extruding a separate layer or adhesively securing a show surface, etc. to improve the aesthetic appeal. Unfortunately, these solutions either add undesired costs or complexity to the assembly, or result in an arrangement that is difficult to manufacture, assemble, or has quality control issues.

Thus, a need exists to resolve or improve upon show surface problems and imperfections associated with vehicle weatherseals such as outer belts.

A further prior art weatherseal for connecting to a flange of a vehicle and past which a window is adapted to slide is disclosed in patent US 6321490 B1 (on which the preamble of claim 1 is based). The weatherstrip includes three separate components. The first component is a U-shaped part configured to receive the vehicle flange. The second component is a sealing lip adapted to be slidingly engaged by a window and the third component is a decorative cover which is snapped into engagement with the second component and may be molded or extruded. These three components are interconnected by mechanical interlocking.

A similar prior weatherseal is disclosed in patent US 6141854 which has a similar structure to that described above but in which the cover is separately formed of metal.

### Summary of the Invention

According to a first aspect of the invention there is provided a weatherseal received on an associated vehicle, the weatherseal comprising a body having a generally inverted U-shaped conformation including first and second legs dimensioned for mounting receipt over an associated vehicle flange, a seal lip extending from the first leg of the body for sealing engagement with an associated vehicle window and an exterior cap dimensioned to snap-fit over at least a portion of the second leg **characterized in that** the exterior cap is integrally extruded or molded to the body and connected to the body by a hinge to provide an improved show surface.

A free end of the exterior cap has a hook conformation allowing the exterior cap to snap-fit over the similarly contoured body.

In one preferred embodiment, the exterior cap is hinged to an outer end of the second leg, while in another embodiment, the exterior cap is hinged to the first leg adjacent an interconnecting region of the body.

In another embodiment, the exterior cap follows a different contour than the second leg of the body.

In still another arrangement, gripper fins are eliminated and the second leg has a curved contour adapted to grip the associated vehicle flange.

According to a second aspect of the invention there is provided a method of manufacturing a weatherseal having an improved show surface comprising the steps of forming a body having first and second legs dimensioned for receipt over an associated vehicle flange, the first leg including a seal lip adapted to engage an associated vehicle window forming an exterior cap dimensioned for receipt over the second leg and including a hook edge the exterior cap being integrally extruded or molded to the body and being connected to the body by a hinge and extending the hook edge into engagement with one of the first and second legs of the body.

A primary advantage of the invention is the improved aesthetics of the show surface.

Yet another benefit of the invention resides in the ease with which the weatherseal is manufactured.

Still another benefit is associated with the ease in assembling the arrangement.

Still other features and benefits of the invention will be described in the following detailed description.

### Brief Description of the Drawings

FIGURE 1 is a cross-sectional view of a prior art EPDM/metal outer belt weatherseal.

FIGURE 2 is a cross-sectional view of a prior art thermoplastic outer belt weatherseal.

FIGURE 3 is a cross-sectional view of a first preferred embodiment of the invention.

FIGURE 4 is a cross-sectional view of the extrusion position of the weatherseal of FIGURE 3.

FIGURE 5 is a cross-sectional view of a second preferred embodiment of the invention.

[Deleted]

FIGURE 6 is a cross-sectional view of a third preferred embodiment of the invention.

FIGURE 7 is a cross-sectional view of a fourth preferred embodiment of the invention.

FIGURE 8 is a cross-sectional view of a fifth preferred embodiment of the invention.

### Detailed Description of the Invention

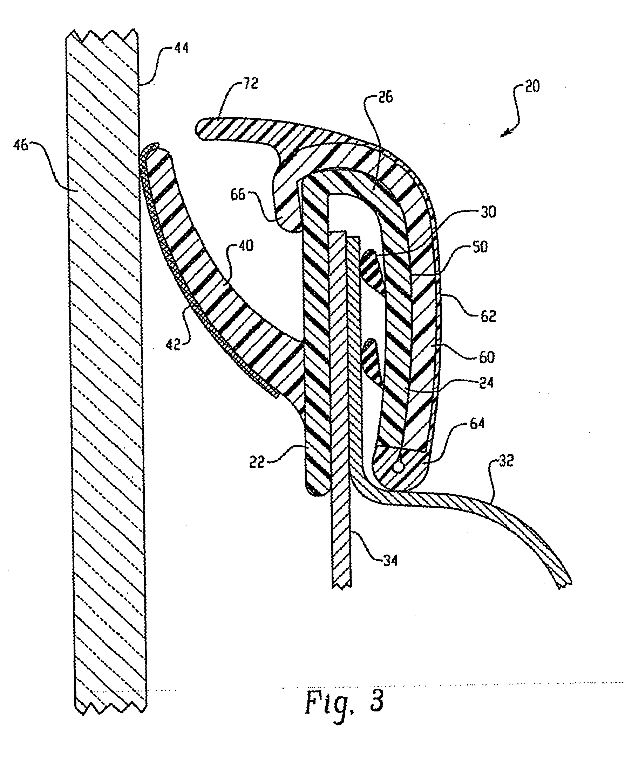

Turning to FIGURE 3, a first embodiment of an outer belt weatherseal **20** is shown and includes an inverted, generally U-shaped body having a first leg **22** and a second leg **24** joined along an interconnecting region 26. Means for gripping such as individual gripper fins **30** extend inwardly from the second leg for gripping engagement with an outer vehicle flange surface **32,** which is joined to inner vehicle flange **34.** The flange portions are usually welded together in this region, and therefore the first and second legs of the weatherseal body extend in generally parallel relation with the vehicle flange in this region.

The weatherseal body is formed of a generally rigid plastic in this embodiment such as polypropylene. Extending outwardly from the first leg at an angle is a seal lip **40** that includes a coating or low-friction surface **42** on the surface of the seal lip that slidably engages surface **44** of the vehicle window **46.** Preferably, the seal lip is formed of a less rigid material than the body so that the seal lip flexes and provides a wiping, sealing interface between the surface **42** and the window glass.

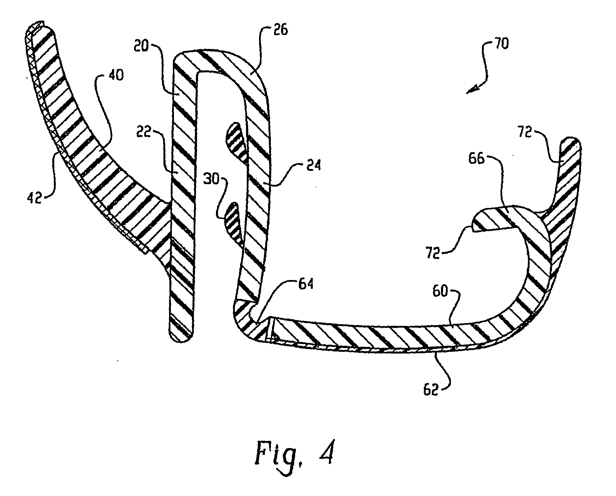

On an opposite surface of the second leg from the grippers is surface **50.** In the prior art, this surface is often the show surface since it is visible from the exterior of the vehicle. In accordance with the present invention, however, surface **50** is covered by a mechanically engaged or snap-on exterior cap **60** having an improved, aesthetically pleasing outer surface or show surface **62** that can be made from different materials. The exterior cap is preferably unitarily attached to the body in the first preferred embodiment, and in particular is secured to the body along a hinge **64.** The hinge **64** is formed from a less rigid, more flexible material such as a different thermoplastic or elastomeric material that allows the exterior cap to move relative to the body along the flexible hinge **64.** This freedom of movement is particularly evident by comparing the extruded position shown in FIGURE 4 with the installed position shown in FIGURE 3. In this arrangement, the exterior cap is secured at a first end to the hinge **64** and includes a tightly curved engaging end or hook 66 at an opposite end that is dimensioned and adapted for a snap-fit engagement with the first leg **22** and interconnecting region **26** of the weatherseal body. Thus, the hook **66** has the same general contour as that of the first leg and interconnecting portion in this region and provides at least a partial mechanical engagement with the body. From the position shown in FIGURE 4, the exterior cap rotates generally in the direction of reference numeral **70** (counter-clockwise as shown) and the hook **66** is lifted up and over the interconnecting region **26** of the body. The terminal end **72** of the hook engages the external surface of the first leg (FIGURE 3). The hinge **64** is sufficiently flexible to allow the exterior cap to be rotated as shown by reference numeral **70** and also to lift upwardly (in the direction upwardly as shown in FIGURE 4) to be received over the interconnecting portion **26** of the body. The flexibility of the hinge is such that the elastic nature of the material exerts a downward retaining force so that the hook end is not easily removed from the installed position shown in FIGURE 3 once the cap is snapped over the body.

In addition, a hider lip **72** extends from the exterior cap. The lip **72** extends outwardly from the exterior cap adjacent the hook **66** and covers a gap between the body and the seal lip when the weatherseal is mounted along the belt line of the window opening. The lip covers a perceived gap between the body and the seal lip that would otherwise be apparent when the weatherseal is installed on the vehicle.

As shown, the exterior cap may be formed of the same material as the U-shaped body. On the other hand, the hider lip **72** is preferably formed of a different material, such as the same flexible elastomeric material used to form the hinge **64.** Thus, in the arrangement of FIGURES 3 and 4, a thermoplastic co-extrusion method is used in which up to three or four different dissimilar materials are used to form the assembly. It will be appreciated, though, that the assembly could be molded.

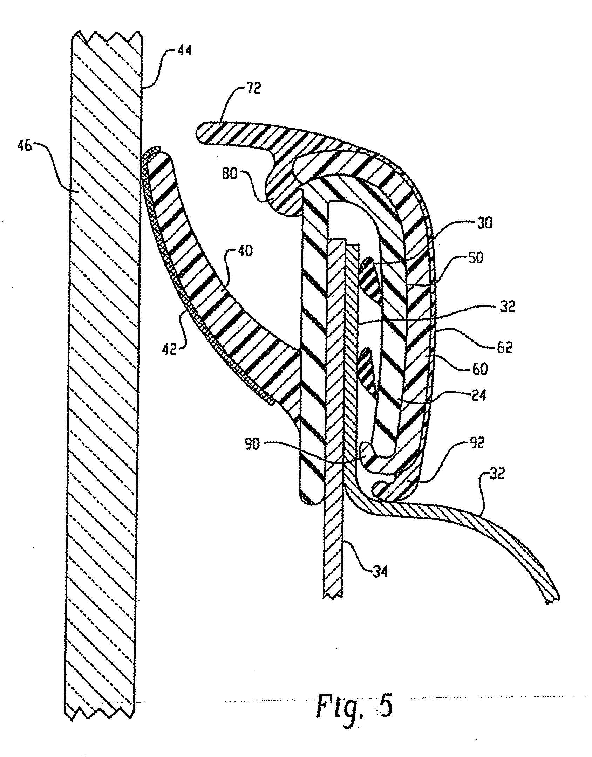

A second preferred embodiment is shown in FIGURE 5. For ease of reference, like components are referred to by like reference numerals with a primed suffix (') and new components with a new numeral. The primary area of distinction is the location of hinge **80.** Particularly, the exterior cap **60'** is formed with the hinge **80** at one end opposite from the hook **90.** Here, however, the hook **90** is located at the terminal end of the second leg and adapted to conform around the terminal end of the leg while providing a connection with the hinge adjacent the hider lip **72'.** In other words, the location of the hook and the hinge are reversed in the embodiment of FIGURE 5 relative to that shown in FIGURES 3 and 4.

In addition, a cushion lip **92** proceeds outwardly from the exterior cap adjacent the hook **90** for engagement with the outer vehicle flange **32.** As will be appreciated, although shown in an installed position in FIGURE 5, the show surface **62'** of the exterior cap faces outwardly of the vehicle and covers the outer face **50** of the second leg.

[ Deleted ]

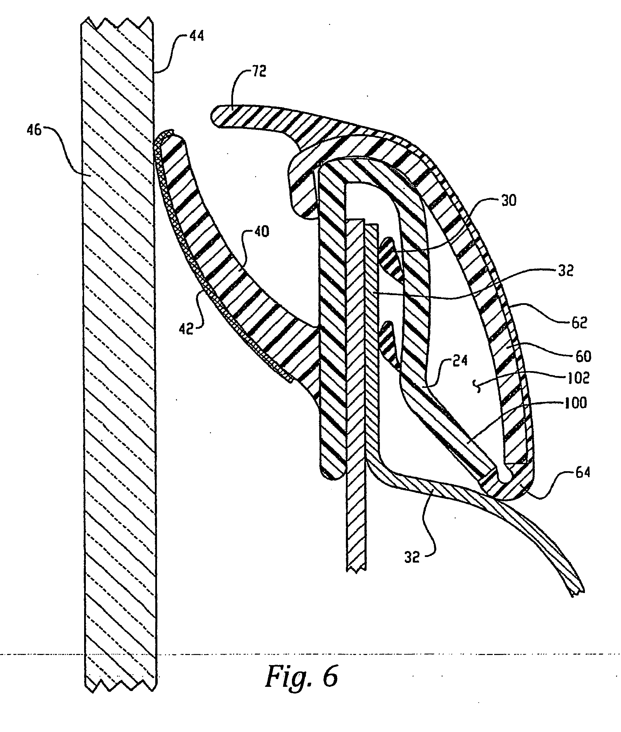

FIGURE 6 is perhaps most closely related to the embodiment of FIGURES 3 and 4 described above. That is, the outer belt weatherseal includes a hinge **64'** secured to the outer terminal end of the second leg. Here, the outer end of the second leg includes an angled portion **100** that extends in diverging relation from the otherwise generally parallel relation between the first and second legs of the body Thus, in the region of the grippers **30',** the first and second legs extend in generally parallel relation which, in turn, conforms to and is parallel to the vehicle flange in this region. The angled portion **100** in the second leg, proceeds away from the flange and positions the hinge **64',** like the embodiment of FIGURE 3, to serve as a cushion lip engaging the outer metal flange **32'.** The exterior cap is connected at a first or lower end to the hinge and terminates in a hook **66'** at the second end adjacent the hiding lip **72.** The contour of the exterior cap, however, is different from and spaced from the second leg to define a cavity **102.** Thus, the show surface may not follow the same contour as the second leg as it proceeds over the flange. It will also be appreciated from a review of FIGURE 6 that although the hinge **64'** is located at the lower end of the second leg, the reverse arrangement where the hinge is located at the top as seen in the embodiment of FIGURE 5 could be used without departing from the scope and intent of the invention.

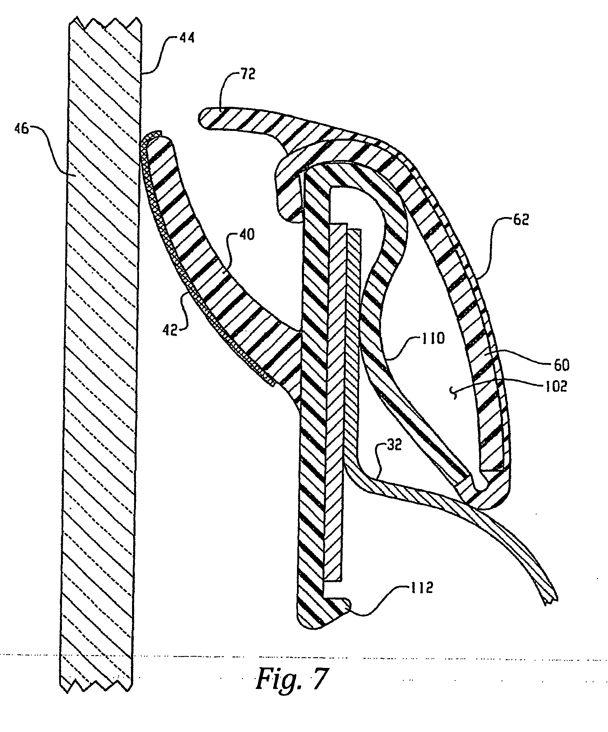

In FIGURE 7, the grippers **30** used in the prior embodiments are eliminated. Instead, the second leg has a curved contour, specifically, a concave portion adapted to grippingly engage against the flange of the vehicle. Thus, the second leg is non-parallel to the first leg and the concave portion **110** serves the gripping function of the prior embodiments. The outer, terminal end of the second leg also angles outwardly and is more akin to the arrangement of FIGURE 6, where the hinge **64'** engages the body panel of the vehicle as a cushion lip and the remainder of the exterior cap follows a smooth arcuate, non-parallel contour relative to the first leg. The hook **66'** at the end of the exterior cap adjacent hiding lip **72'** performs a snap-on feature to secure the show surface in place. An additional overhang or hook **112** is provided at the lower end of the first leg for receipt in an opening of the inner flange of the vehicle.

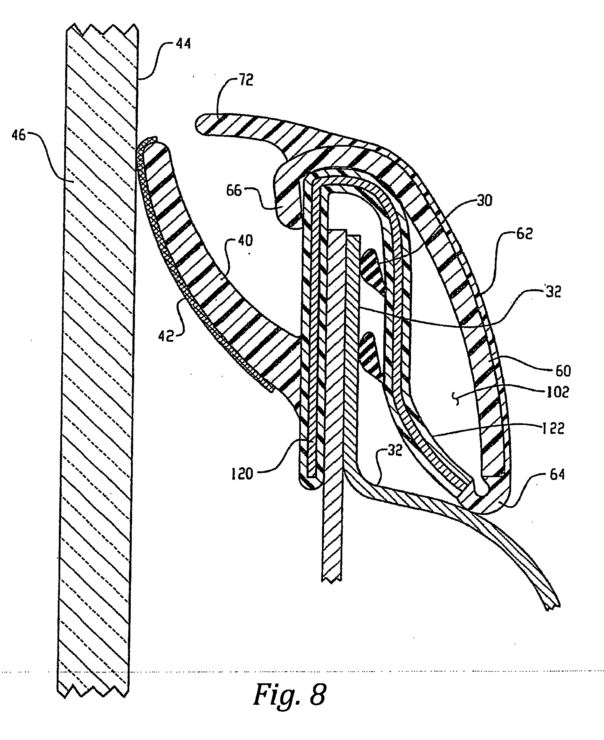

The embodiment of FIGURE 8 illustrates that the weatherseal body may be reinforced with a rigid carrier, such as metal carrier **120.** The carrier is preferably encapsulated in the material of the body, i.e., along the first and second legs **22', 24',** as well as the interconnecting portion **26'.** The second leg also includes a series of grippers **30'** to engage the weld flange along a region of the second leg that extends generally parallel to the first leg. The outer end of the second leg has a curvilinear contour **122** that merges into the hinge portion **64'.** Again, the exterior cap is secured to the hinge at a first end and includes hook **66'** at the opposite end for receipt over the interconnecting portion of the first leg. Here, the first and second legs are preferably an elastomeric material such as EPDM extruded over the metal carrier. Thus, the seal lip and body are all an EPDM material (with the body reinforced with a metal carrier) and the exterior cap formed of a co-extruded thermoplastic. The hinge **64'** is also co-extruded and has the same flexibility as the seal lip, while hiding lip **72'** may be formed of a dissimilar material if so desired.

The invention has been described with reference to the preferred embodiments. Obviously, modifications and alterations will occur to others upon reading and understanding the preceding detailed description. It is intended that the invention be construed as including all such modifications and alterations insofar as they come within the scope of the appended claims.

## Claims

1. A weatherseal (20) received on an associated vehicle, the weatherseal (20) comprising:
a body having a generally inverted U-shaped conformation including first and second legs (22, 24) dimensioned for mounting receipt over an associated vehicle flange (34);
a seal lip (40) extending from the first leg (22) of the body for sealing engagement with an associated vehicle window (46); and
an exterior cap (60) dimensioned to snap-fit over at least a portion of the second leg (24)
**characterized in that** the exterior cap (60) is integrally extruded or molded to the body and connected to the body by a hinge (64) to provide an improved show surface (62).

2. The invention of claim 1 wherein the exterior cap (60) is connected along a hinged region (64) with the second leg (24).

3. The invention of claim 2 wherein the exterior cap snap fits over a region of the body spaced from the hinged region (64).

4. The invention of claim 1 wherein one of the first and second legs (24) includes means (30) for gripping the associated flange (34).

5. The invention of claim 1 wherein the body includes a rigid reinforcing member (120) therein.

6. The invention of claim 1 wherein the exterior cap (60) includes a finish layer (62) on an outer surface thereof.

7. The invention of claim 1 wherein the sealing lip (40) includes a low friction layer (42) thereon.

8. The invention of claim 1 further comprising an additional lip (72) for hiding the seal lip (40) from view.

9. The invention of claim 1 wherein the seal lip (40) is formed of a different material than the body.

10. The invention of claim 1 wherein the first and second legs (22, 24) of the body are substantially parallel.

11. The invention of claim 10 wherein the exterior cap (60) has a different contour than the second leg (24).

12. The invention of claim 10 wherein the exterior cap (60) has substantially the same contour as the second leg (24).

13. The invention of claim 1 wherein the exterior cap (60) is hinged to the first leg (22).

14. The invention of claim 1 wherein the exterior cap (60) is hinged to the second leg (24).

15. A method of manufacturing a weatherseal (20) having an improved show surface (62) comprising the steps of:
forming a body having first and second legs (22, 24) dimensioned for receipt over an associated vehicle flange (34), the first leg (22) including a seal lip (40) adapted to engage an associated vehicle window (46);
forming an exterior cap (60) dimensioned for receipt over the second leg (24) and including a hook edge (66, 90) the exterior cap (60) being integrally extruded or molded to the body and being connected to the body by a hinge (64); and
extending the hook edge (66, 90) into engagement with one of the first and second legs (22, 24) of the body.

16. The invention of claim 15 wherein the hinge forming step interconnects the exterior cap (60) and the first leg (22).

17. The invention of claim 15 comprising the step of folding the exterior cap (60) along the hinge (80) and the hook edge (90) of the exterior cap (60) engages the second leg (24).

18. The invention of claim 15 wherein the hinge forming step interconnects the exterior cap (60) and the second leg (24).

19. The invention of claim 18 comprising the step of folding the exterior cap (60) along the hinge (64) and the hook edge (66) of the exterior cap (60) engages the first leg (22).

20. The invention of claim 15 wherein the body and exterior cap forming steps include the step of extruding at least one of the body and exterior cap (60).

21. The invention of claim 20 wherein the body and exterior cap forming steps include the step of extruding both of the body and exterior cap (60).

22. The invention of claim 20 wherein the body and exterior cap forming steps include extruding a hinge (64) from a different material than the body and exterior cap (60).

23. The invention of claim 15 wherein the body and exterior cap forming steps include the step of molding at least one of the body and exterior cap (60).

24. The invention of claim 15 wherein the body and exterior cap forming steps include the step of molding both of the body and exterior cap (60).

## Patentansprüche

1. Witterungsdichtung (20), die an einem zugeordneten Fahrzeug angebracht ist, wobei die Witterungsdichtung (20) umfasst:
einen Körper, der eine allgemein umgekehrt U-förmige Ausformung hat, die einen ersten und einen zweiten Schenkel (22, 24) aufweist, die zur Anbringung über einem zugeordneten Fahrzeugflansch (34) ausgelegt sind;
eine Dichtungslippe (40), die sich für einen dichtenden Eingriff mit einem zugeordneten Fahrzeugfenster (46) von dem ersten Schenkel (22) des Körpers erstreckt; und
eine äußere Abdeckung (60), die für einen Schnappsitz über mindestens einem Teil des zweiten Schenkels (24) ausgelegt ist,
**dadurch gekennzeichnet, dass** die äußere Abdeckung (60) mit dem Körper zusammen einstückig extrudiert oder an diesen angeformt ist und über ein Scharnier (64) mit dem Körper verbunden ist, um eine verbesserte Schauseite (62) zu bieten.

2. Erfindung nach Anspruch 1, wobei die äußere Abdeckung (60) entlang einem klappbaren Bereich (64) mit dem zweiten Schenkel (24) verbunden ist.

3. Erfindung nach Anspruch 2, wobei die äußere Abdeckung in einem Schnappsitz über einem Bereich des Körpers sitzt, der vom klappbaren Bereich (64) beabstandet ist.

4. Erfindung nach Anspruch 1, wobei entweder der erste oder der zweite Schenkel (24) ein Mittel (30) zum Festklemmen am zugeordneten Flansch (34) aufweist.

5. Erfindung nach Anspruch 1, wobei der Körper in sich ein steifes Verstärkungselement (120) aufweist.

6. Erfindung nach Anspruch 1, wobei die äußere Abdeckung (60) eine Oberflächenschicht (62) auf ihrer Außenoberfläche aufweist.

7. Erfindung nach Anspruch 1, wobei die Dichtungslippe (40) auf sich eine Gleitschicht (42) aufweist.

8. Erfindung nach Anspruch 1, ferner umfassend eine zusätzliche Lippe (72) zum Verbergen der Dichtungslippe (40).

9. Erfindung nach Anspruch 1, wobei die Dichtungslippe (40) aus einem anderen Werkstoff als der Körper ausgebildet ist.

10. Erfindung nach Anspruch 1, wobei der erste und der zweite Schenkel (22, 24) der Körpers im Wesentlichen parallel sind.

11. Erfindung nach Anspruch 10, wobei die äußere Abdeckung (60) eine andere Kontur als der zweite Schenkel (24) hat.

12. Erfindung nach Anspruch 10, wobei die äußere Abdeckung (60) im wesentlichen dieselbe Kontur wie der zweite Schenkel (24) hat.

13. Erfindung nach Anspruch 1, wobei die äußere Abdeckung (60) gelenkig mit dem ersten Schenkel (22) verbunden ist.

14. Erfindung nach Anspruch 1, wobei die äußere Abdeckung (60) gelenkig mit dem zweiten Schenkel (24) verbunden ist.

15. Verfahren zum Herstellen einer Witterungsdichtung (20) mit einer verbesserten Schauseite (62), umfassend die folgenden Schritte:
Ausbilden eines Körpers mit einem ersten und einem zweiten Schenkel (22, 24), die zur Aufnahme eines zugeordneten Fahrzeugflanschs (34) ausgelegt sind, wobei der erste Schenkel (22) eine Dichtungslippe (40) aufweist, die dazu ausgelegt ist, mit einem zugeordneten Fahrzeugfenster (46) in Eingriff zu kommen;
Ausbilden einer äußeren Abdeckung (60), die zur Anbringung über dem zweiten Schenkel (24) ausgelegt ist und eine Hintergreifkante (66, 90) aufweist, wobei die äußere Abdeckung (60) mit dem Körper zusammen einstückig extrudiert oder an diesen angeformt ist und über ein Scharnier (64) mit dem Körper verbunden ist; und
Anordnen der Hintergreifkante (66, 90) in Eingriff mit entweder dem ersten oder dem zweiten Schenkel (22, 24) des Körpers.

16. Erfindung nach Anspruch 15, wobei der Schritt des Ausbildens des Scharniers die äußere Abdeckung (60) und den ersten Schenkel (22) miteinander verbindet.

17. Erfindung nach Anspruch 15, umfassend den Schritt des Klappens der äußeren Abdeckung (60) entlang dem Scharnier (80), und die Hintergreifkante (90) der äußeren Abdeckung (60) kommt mit dem zweiten Schenkel (24) in Eingriff.

18. Erfindung nach Anspruch 15, wobei der Schritt des Ausbildens des Scharniers die äußere Abdeckung (60) und den zweiten Schenkel (24) miteinander verbindet.

19. Erfindung nach Anspruch 18, umfassend den Schritt des Klappens der äußeren Abdeckung (60) entlang dem Scharnier (64), und die Hintergreifkante (66) der äußeren Abdeckung (60) kommt mit dem ersten Schenkel (22) in Eingriff.

20. Erfindung nach Anspruch 15, wobei die Schritte des Ausbildens des Körpers und der äußeren Abdeckung den Schritt des Extrudierens entweder des Körpers oder der äußeren Abdeckung (60) oder von beiden beinhalten.

21. Erfindung nach Anspruch 20, wobei die Schritte des Ausbildens des Körpers und der äußeren Abdeckung den Schritt des Extrudierens sowohl des Körpers als auch der äußeren Abdeckung (60) beinhalten.

22. Erfindung nach Anspruch 20, wobei die Schritte des Ausbildens des Körpers und der äußeren Abdeckung das Extrudieren eines Scharniers (64) aus einem anderen Werkstoff als der Körper und die äußere Abdeckung (60) beinhalten.

23. Erfindung nach Anspruch 15, wobei die Schritte des Ausbildens des Körpers und der äußeren Abdeckung den Schritt des Formens entweder des Körpers oder der äußeren Abdeckung (60) oder von beiden beinhalten.

24. Erfindung nach Anspruch 15, wobei Schritte des Ausbildens des Körpers und der äußeren Abdeckung den Schritt des Formens sowohl des Körpers als auch der äußeren Abdeckung (60) beinhalten.

## Revendications

1. Caoutchouc d'étanchéité (20) reçu sur un véhicule associé, le caoutchouc d'étanchéité (20) comprenant :
un corps ayant une conformation généralement en forme de U inversé comprenant des première et seconde pattes (22, 24) dimensionnées pour la réception de montage sur un rebord (34) de véhicule associé ;
une lèvre de joint d'étanchéité (40) s'étendant à partir de la première patte (22) du corps pour la mise en prise étanche avec une vitre (46) de véhicule associé ; et
un capuchon extérieur (60) dimensionné pour s'emboîter sur au moins une partie de la seconde patte (24),
**caractérisé en ce que** le capuchon extérieur (60) est extrudé ou moulé de manière solidaire au corps et raccordé au corps par une charnière (64) pour fournir une surface de présentation (62) améliorée.

2. Invention selon la revendication 1, dans laquelle le capuchon extérieur (60) est raccordé le long d'une région articulée (64) avec la seconde patte (24).

3. Invention selon la revendication 2, dans laquelle le capuchon extérieur s'emboîte sur une région du corps espacée de la région articulée (64).

4. Invention selon la revendication 1, dans laquelle l'une des première et seconde pattes (24) comprend des moyens (30) pour saisir le rebord (34) associé.

5. Invention selon la revendication 1, dans laquelle le corps comprend un élément de renforcement rigide (120) à l'intérieur de celui-ci.

6. Invention selon la revendication 1, dans laquelle le capuchon extérieur (60) comprend une couche de finition (62) sur sa surface externe.

7. Invention selon la revendication 1, dans laquelle la lèvre d'étanchéité (40) comprend une couche à faible frottement (42) sur celle-ci.

8. Invention selon la revendication 1, comprenant en outre une lèvre supplémentaire (72) pour cacher la lèvre d'étanchéité (40) de la vue.

9. Invention selon la revendication 1, dans laquelle la lèvre d'étanchéité (40) est formée avec un matériau différent du corps.

10. Invention selon la revendication 1, dans laquelle les première et seconde pattes (22, 24) du corps sont sensiblement parallèles.

11. Invention selon la revendication 10, dans laquelle le capuchon extérieur (60) a un contour différent de la seconde patte (24).

12. Invention selon la revendication 10, dans laquelle le capuchon extérieur (60) a sensiblement le même contour que la seconde patte (24).

13. Invention selon la revendication 1, dans laquelle le capuchon extérieur (60) est articulé par rapport à la première patte (22).

14. Invention selon la revendication 1, dans laquelle le capuchon extérieur (60) est articulé par rapport à la seconde patte (24).

15. Procédé pour fabriquer un caoutchouc d'étanchéité (20) ayant une surface de présentation améliorée (62) comprenant les étapes consistant à :
former un corps ayant des première et seconde pattes (22, 24) dimensionnées pour la réception sur un rebord (34) de véhicule associé, la première patte (22) comprenant une lèvre d'étanchéité (40) adaptée pour mettre en prise une vitre (46) de véhicule associé ;
former un capuchon extérieur (60) dimensionné pour la réception sur la seconde patte (24) et comprenant un bord de crochet (66, 90), le capuchon extérieur (60) étant extrudé ou moulé de manière solidaire sur le corps et étant raccordé au corps par une charnière (64) ; et
étendre le bord de crochet (66, 90) en mise en prise avec l'une des première et seconde pattes (22, 24) du corps.

16. Invention selon la revendication 15, dans laquelle l'étape de formation de charnière interconnecte le capuchon extérieur (60) et la première patte (22).

17. Invention selon la revendication 15, comprenant l'étape consistant à plier le capuchon extérieur (60) le long de la charnière (80) et le bord de crochet (90) du capuchon extérieur (60) met en prise la seconde patte (24).

18. Invention selon la revendication 15, dans laquelle l'étape consistant à former la charnière interconnecte le capuchon extérieur (60) et la seconde patte (24).

19. Invention selon la revendication 18, comprenant l'étape consistant à plier le capuchon extérieur (60) le long de la charnière (64) et le bord de crochet (66) du capuchon extérieur (60) met en prise la première patte (22).

20. Invention selon la revendication 15, dans laquelle les étapes consistant à former le corps et le capuchon extérieur comprennent l'étape consistant à extruder au moins l'un parmi le corps et le capuchon extérieur (60).

21. Invention selon la revendication 20, dans laquelle les étapes consistant à former le corps et le capuchon extérieur comprennent l'étape consistant à extruder à la fois le corps et le capuchon extérieur (60).

22. Invention selon la revendication 20, dans laquelle les étapes consistant à former le corps et le capuchon extérieur comprennent l'étape consistant à extruder une charnière (64) d'un matériau différent du corps et du capuchon extérieur (60).

23. Invention selon la revendication 15, dans laquelle les étapes consistant à former le corps et le capuchon extérieur comprennent l'étape consistant à mouler au moins l'un parmi le corps et le capuchon extérieur (60).

24. Invention selon la revendication 15, dans laquelle les étapes consistant à former le corps et le capuchon extérieur comprennent l'étape consistant à mouler à la fois le corps et le capuchon extérieur (60).
